## Europäisches Patentamt

## European Patent Office

## Office européen des brevets

(11) Veröffentlichungsnummer: **0 292 589**

**A1**

# (12) EUROPÄISCHE PATENTANMELDUNG

(21) Anmeldenummer: **87107656.8**

(22) Anmeldetag: **26.05.87**

(51) Int. Cl.⁴: **A01B 29/04**

(43) Veröffentlichungstag der Anmeldung:
**30.11.88 Patentblatt 88/48**

(84) Benannte Vertragsstaaten:
**AT DE ES FR GB**

(71) Anmelder: **Güttler, Fritz**
**Drosselweg 5**
**D-7315 Weilheim-Teck(DE)**

(72) Erfinder: **Güttler, Fritz**
**Drosselweg 5**
**D-7315 Weilheim-Teck(DE)**

(54) **Ackerwalze zur Bearbeitung und Festigung landwirtschaftlicher Böden.**

(57) Diese Ackerwalze besteht aus mehreren, auf einer gemeinsamen Achse (4, 11) parallel zueinander gelagerten und axial aneinander gehaltenen Walzenringe (1.2), vorzugsweise mit gezacktem Walzenringumfang, wobei jeder Walzenring (1.2) aus zwei in der senkrecht zur Achse stehenden Ebene getrennten Teilringen (1, 1b) und (2) aufgebaut ist, von denen jeweils ein Teilring (1, 1b) mit einer Nabe etwas größeren Innendurchmessers als die Achse und entweder mehreckigen Querschnitts (3) oder mit einer Nabeninnenwandeinbuchtung-bzw.Ausbuchtung in radialer und axialer Ausdehnung oder einer Nabenquerdurchbohrung ausgeführtund der Querschnitt der Achse dementsprechend gestaltet ist, sodaß die auf der gemeinsamen Achse axial aneinander gehaltenen Teilringe (1, 1b)auf der gemeinsamen Achse drehfest gelagert sind. Weiter ist jeder Teilring (1,1b) mit einer seitlich abstehenden Distanzbüchse auf Abstand zum benachbarten, gleich ausgebildeten Teilring (1, 1b) gehalten, hingegen die anderen Teilringe (2) grösseren Umkreisdurchmessers (2a) mit einer Nabe (5) entsprechend grösseren Innendurchmessers versehen sind, mit der sie drehbar und radial beweglich auf der dem ersten Teilring (1, 1b) zugeordneten Distanzbüchse mit axialem Spiel zwischen zwei benachbarten ersten Teilringen (1, 1b) geführt sind. Ferner ist der Ackerwalzenachse (4, 11) eine Achsdrehabnahmeeinrichtung (6, 7) zugeordnet, bzw. einem Teilring (1b).

Fig. 3

## Ackerwalze zur Bearbeitung und Festigung landwirtschaftlicher Böden

Die Erfindung betrifft eine Ackerwalze zur Bearbeitung und Festigung landwirtschaftlicher Böden gemäß dem Oberbegriff desPatentanspruches 1.

Ackerwalzen dienen in der Landwirtschaft neben der Zerlegung von Bodenschollen und dem Eindrücken von Steinen in die Bodenoberfläche vornehmlich der Rückfestigung von zu locker liegenden Ackerböden vor oder nach der Einsaat von Samen,neuerdings auch gleich in Verbindung mit der Bodenbearbeitung und Saatbettherrichtung durch Koppelung mit einer Bodenbearbeitungsmaschine,wie Kreiselegge,Eggenkombination u.a.

Es sind Ackerwalzen gemäß dem Oberbegriff des Patentanspruches 1 bekannt unter der Bezeichnung "Cambridgewalzen", "Crosskillwalzen","Ringelwalzen" u.a. Eine weitere ist unter der Bezeichnung "Stern-oder Packerwalze" aus DE 27 47 535.C2 mit der Handelsbezeichnung "Prismenwalze" bekannt. Hierbei besteht jeder Walzenring aus zwei in der senkrecht zur Achse stehenden Ebene voneinander getrennten Teilringen unterschiedlichen Umkreisdurchmessers, mit anhähernd gleicher wirksamer Zackenhöhe, von denen jeweils ein Teilring mit einer Nabe auf der gemeinsamen Achse runden Querschnitts, wie solche alle bekannten Ackerwalzen aufweisen, gelagert und mit einer seitlich abstehenden Distanzbüchse auf Abstand zu dem benachbarten, gleich ausgebildeten Teilring gehalten ist, während die anderen Teilringe mit dem größeren Umkreisdurchmesser mit einer Hülse entsprechend größeren Innendurchmessers radial beweglich auf der dem ersten Teilring zugeordneten Distanzbüchse und mit axialem Spiel zwischen zwei benachbarten ersten Teilringen geführt sind.

Gemeinsam ist den bekannten Ackerwalzen, daß ihre ein-oder mehrtei lig ausgebildeten Walzenringe auf Achsen runden Querschnitts lose und frei drehbeweglich angeordnet sind. Die jeweils gemeinsame Achse dreht sich infolge des beim Abrollen auf dem Boden zustande kommenden Kraft/Reibungsschlusses mit den Naben der auf ihr axial aneinandergehaltenen Walzenringe, mit mehr oder weniger Schlupf je nach Walzenfremdbelastung und Tiefe der gerade anstehenden lockeren Bodenschicht und je tiefer, desto größer der Schlupf, der letztlich einzelne Walzenringe oder ganze Gruppen zum Hemmen und Stillstand bringen kann. Bei Walzenring-Drehhemmungen wird unter Anpreßdruck vorweg geschobene Feinerde zwischen die Flanken benachbarter Ringe eingequetscht, wodurch zwischen ihnen ein Kraft/Reibungsschluß entsteht, der oft die ganze Walze blockiert und Bodenhaufen vor sich auftürmt. Dies tritt verstärkt ein, wenn wie es in neuerer Zeit häufiger geschieht, ein/e Bodenbearbeitungsgerät/Maschine der Ackerwalze vorgekoppelt ist und zur Arbeitstiefenbegrenzung mit voller Arbeitslast auf ihr abgestütz ist, außerdem häufig partiell Bodenaufwürde vor ihr auftürmt, in die einzelne Walzenringe oder eine ganze Gruppe bis nahe Achshöhe einläuft, wodurch deren Rollvermögen schlagartig gehemmt und häufig genug auf Null abgebremst ist. Mitunter ist dem vorgeschaltetem Gerät auch noch eine Sämaschine aufgesattelt, die mit Samenfüllung die schon hohe Fremdbelastung auf die Ackerwalze weiter erheblich erhöht und Problem-verstärkend wirkt. Andererseits gibt es hier oft Platzierungsprobleme für das meist seitlich angebrachte Sämaschinenantriebsrad, das bei jeder zweiten Arbeitsfahrt im noch unbearbeiteten, meist vorher gepflügten und grobschollig liegenden Boden abrollen muß und unkontollierbarem Schlupf unterliegt, was nachteilige, unterschiedliche Saatmengenausbringung bewirkt.

Die Aufgabe der Erfindung besteht darin, hier Abhilfe zu schaffen und gleichzeitig darüber hinaus den Benutzungsumfang und den Anwendungsbereich der Ackerwalzen auszudehnen auf die streifenweise Bearbeitung von Reihenkulturen und streifenweisen Bodenfestigung vor und nach der Saatausbringung, ferner zum sichererem und -schlupffreierem wegabhängigen Antrieb von Nebenaggregaten wie Dosiereinrichtungen für Sämaschinen, Pflanzenschutzspritzen u.a.

Ausgehend von der aus DE 27 47 535.C2 bekannten Ackerwalze, löst die Erfindung dieAufgabe, eine Ackerwalze zu schaffen, bei der unter den oft schwierigen Bedingungen des betriebsmäßigen Einsatzes und beson ders in Verwendung als Nahläufer und Träger einer vorgekoppelten Bodenbearbeitungsmaschine, z.B.Kreiselegge, der unkontrollierte Schlupf zwischen einzelnen Walzeteilringen, das Hemmen und letztlich gänzliche Blockieren ganzer Ringpartien beim Auflaufen auf partiell aufgetürmte Bodenanhäufungen und/oder in tief vorgelockerter Erde zuverlässig unterbunden, zumindest weitgehend reduziert ist, ferner eine Ackerwalze, bei der zur noch besseren Selbstreinigung der Walzenringe die dafür unerlässliche Radialbeweglichkeit jedes Teilringes mit größerem Umkreisdurchmesser nachhaltend verstärkt und dauerhaft gesichert ist und weiter eine Ackerwalze, die als ganzes nahezu schlupffrei im zu festigenden Boden abrollt, das Drehmoment der einzelnen Teilringe zu einem einzigen, großen Drehmoment kumuliert,somit befähigt ist, Nebenaggregate damit zu versorgen und dennoch soviel davon in Reserve zu besitzen, daß jeder einzelne Teilring in kritischer Situation davon sicher über Bodenhindernisse mitgedreht wird, indem jeder auf der gemeinsamen Achse axial aneinander gehaltene Walzenteilring kleineren Umkreisdurchmessers kraft-oder formschlüssig drehfest mit den benachbarten, gleich ausgebildeten Teilringen verbunden ist und außerdem der jeweils zwischen zwei solchen Teilringen gelagerte , beim betriebsmäßigen Einsatz unter der seitlich des einen abragenden Distanzbüchse mit radialer Beweglichkeit auf dem Innenring seiner entsprechend weiteren Nabenbüchse abrollende zweite Teilring größeren Umkreisdurchmessers von der voreilenden Friktionsdrehkraft der Distanzbüchse mitgetrieben ist, sodaß auch er leichter und zuverlässiger über Bodenanhäufungen und Steine hinwegrollt, ohne zu blockieren.

Das Erfindungsziel ist auf zwei technisch zwar verschieden ausgelegten, in ihrer Wirkung jedoch gleichen Ausführungswegen erreicht. Die erste Ausführrungsweg sieht vor, die Teilringe 1 auf einer gemeinsamen Achse 4, 11 mit dieser zusammenwirkend, drehfest zu lagern. Der zweite Ausführrungsweg sieht dagegen vor, auf einer runden Achse die Teilringe 1b an beiden Nabenstirnseiten mit den benachbarten, gleich ausgebildeten Teilringen so zu verbinden, daß sie gegeneinander verdrehfest fixiert sind, gemeinsam jedoch auf der gemeinsamen, runden Achse als geschlossene Dreheinheit über die ganze Achslänge hinweg frei drehen, die gemeinsame Achse jedoch unter ihrer Friktionswirkung mit vernachlässigbarem Schlupf mitdrehen, weil in diesem Fall der Abtrieb für Nebenaggregate an einem Teilring 1b an angeordnet ist.

Für beide Ausführungswege gibt es mehrere technische Ausgestaltungswege, deren Wirkungsergebnis aber gleich ist.

Die durch die Erfindung erreichten Vorteile sind im Wesentlichen darin zu sehen,

.. daß jeder Walzenteilring kleineren Umkreisdurchmessers infolge seiner drehfesten Verbindung mit den anderen gleich ausgebildeten, schlupffrei gegenüber den anderen und von diesen zwangsweise mitgedreht ist, somit Bodenanhäufungen ohne Hemmnis mühelos bewältigt,

..daß die als geschlossene Einheit wirkenden ersten Teilringe eine große gemeinsame Bodenauflage haben, neben einem hohen Tragvermögen dadurch ein nahezu schlupffreies Abrollen auf dem zu festigendem Boden gewährleisten und dazu ein kumuliertes großes Drehmoment aufbringen und deshalb ein vorzügliches Antriebselement ist für einen felhlerfreien, wegabhängigen und sicheren Antrieb von Nebenaggregaten. Dadurch ist außerdem erst die Einsparungsmöglichkeit gegeben für die bisher notwendigen, platzmäßig schwer unterzubringenden, bau-und kostenaufwendigen separaten und wegstreckenabnehmenden Antriebräder,

.. daß die als geschlossene Einheit drehenden ersten Teilringe je bestimmter Wegstrecke eine größere Umdrehungszahl haben, als der jeweils zwischen zwei benachbarten angeordnete, dort radial beweglich gelagerte zweite Teilring größeren Umkreisdurchmessers, der dadurch infolge der voreilenden Friktionskraft der seitlich vom ersten Teilring axial abragenden und mit ihm verbundenen Distanzbüchse und infolge der Anordnungsart beider zueinander,zuseinem eigenen Abroll-Drehmoment hinzu starke fremde Drehhilfen empfängt, wodurch Drehhemmnisse vom größeren Teilring problemloser überwunden werden.

.. Daß dadurch weiter die bei Ackerwalzen zufolge DE 27 47 535.C2 schon gegebene große Selbstreinigungskraft von anklebender Erde noch beträchtlich erhöht und erheblich sicherer bewirkt ist.

.. Daß darüberhinaus dadurch die ackerbaulich überaus wichtige und bisher nur bei Ackerwalzen zufoge DE 27 47 535.C2 in ausreichendem Maße feststelbare Aufkrümelung der Bodenoberfläche in exakter Tiefe vorteilhaft weiter verbessert und gesteigert ist und

.. daß schließlich insgesamt die Ackerwalze auch unter boden- und witterungsmäßig schwierigen, betriebsmäßigen Arbeitseinsätzen ein nen störungsfreieren, schnelleren, ordnungsgemäßeren und leistungshöheren Arbeitsablauf, gepaart mit hoher Arbeitsgüte, erbringt.

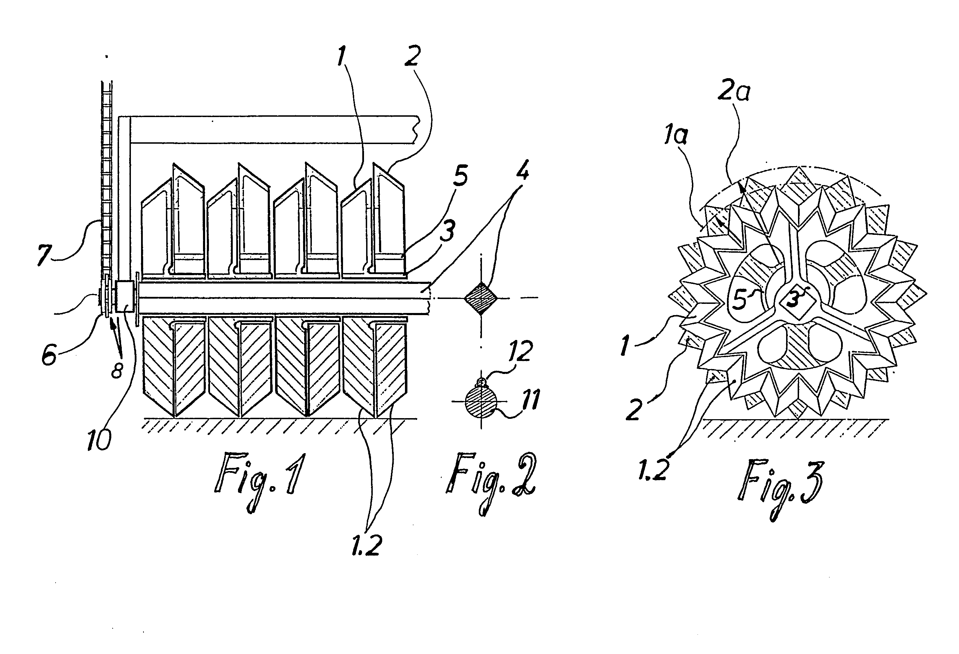

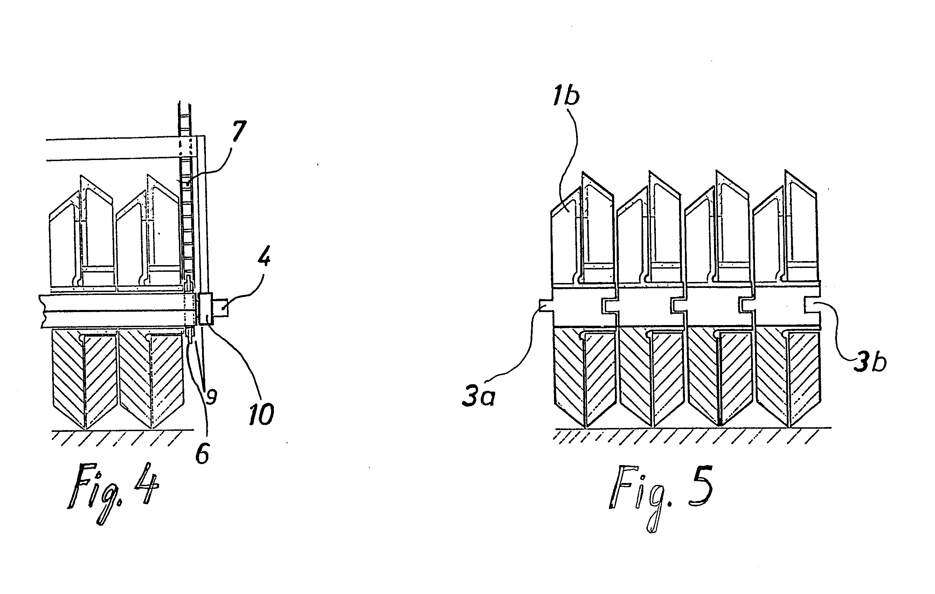

Im folgenden werden die zwei in ihrer technischen Ausgestaltung verschiedenen, in ihrer Arbeitswirkung jedoch gleichen Ausführungswege -für die es jeweils eine Anzahl verschiedener technischer Ausgestaltungsformen- und Möglichkeiten gibt- anhand von lediglich je einem, besonders einfachem und kostengünstigem technischen Gestaltungs/Ausführungsbeispiel darstellenden Zeichnungen näher erläutert. Es zeigt in Figur 1-4 ein technisches Gestaltungsbeispiel des ersten Ausführungsweges,nämlich der Drefestlagerung der Teilringe 1 auf einer gemeinsamen Achse 4, 11 in Zusammenwirkung mit dieser Achse . Es zeigt in Figur 5 ein technisches Gestaltungebeispiel des zweiten Ausführungsweges, nämlich der Drehfestverbindung der Teilringe 1b untereinander/miteinander an deren Nabenstirnseiten, und der als Ganzes auf der Achse drehbaren Lagerung.

Im einzelnen zeigt

Figur 1 in verkleinertem Maßstab und Vorderansicht einen Teilausschnitt einer erfindungsgemäßen Ackerwalze, mit Achslagerung eines Achsendes, Lagerholm mit Querrohr, Achsabtrieb für Nebenaggregate, gemeinsame Achse und darauf angeordnete Walzenringe, aufgebaut aus Teilringen verschiedenen Umkreisdurchmessers,

Figur 2 im gleichen Maßstab, das Querschnittprofil zweier beispielhaften , zur Drehfestlagerung der Teilringe 1 auf einer gemeinsamen Achse in Zusammenwirkung mit dieser, geeigneter Achsen,

Figur 3 im gleichen Maßstab, einen ganzen Walzenring 1.2, bestehend aus zwei Teilringen größeren und kleineren Umkreisdurchmessers in Seitenansicht,

Figur 4 im gleichen Maßstab, in Vorderansicht einen weiteren Teilauschnitt gemäß Figur 1, jedoch mit der Platzierung des Abtriebes für Nebenaggregate auf der Achse innerhalb des Achslagers,

Figur 5 im gleichen Maßstab, in Vorderansicht gleich ausgebildete Teilringe kleineren Umkreisdurchmessers mit auf beiden Stirnseiten der Nabe angeordneter Kupplungseinrichtung zur Drehfestverbindung mit der Nabenstirnseite des jeweils benachbarten.

Nach DE 27 47 535.C2 ist jeder Walzenring aus je einem kleineren und einem größeren Teilring aufgebaut, wobei beide in axialer Richtung einen Nabendurchbruch runden Querschnittes aufweisen, der eine kleinerem und der andere größerem Durchmessers. Hiervon ausgehend, aber auf zuverlässigere,sicherere und bessere Funktion, außerdem erweiterte Anwendungsmöglichkeit zielend, weist der erfindungsgemäße erste Teilring 1 kleineren Umkreisdurchmessers 1a hingegen eine Nabe 3 mit einem mehreckigen Innendurchbruch in axialer Richtung zur Achsaufnahme auf. Die gemeinsame Achse 4 ist in ihrem Querschnittprofil dem des Nabendurchbruches annähernd angepaßt, sodaß die darauf axial aneinandergehaltenen Teilringe 1 mit der Achse 4 drehfest auf ihr gelagert sind. Die vom Teilring 1 seitlich abragende Distanzbüchse ist vorzugsweise einstückig mit der Nabe 3 ausgeführt und hält die Distanz zum benachbarten, gleich ausgeführtem, ebenfalle drehfest gelagertem Teilring 1. Auf der Distanzbüchse ist der zweite Teilring 2 größeren Umkreisdurchmessers 2a radial beweglich und mit axialem Spiel zwischen jeweils zwei benachbarten Teilringen 1 in seiner runden Querschnitt aufweisenden Nabenbüchse 5 größeren größeren Durchmessers gelagert und rollt auf ihrem inneren Mantelkranz, wie bei DE 27 47 535.C2, kraftschlüssig unter der Distanzbüchse, ist aber anders als dort, von der mit dem Teilring 1 und/oder der gemeinsamen Achse 4 drehfest verbundenen ,zwangsdrehenden Distanzbüchse somit friktionsgetrieben, empfängt dadurch permanent Fremdantriebskraft sogar voreilender Art, die sein eigenständiges Drehmoment beträchtlich unterstützen, was sein Drehvermögen über Bodenhindernisse hinweg erheblich steigert. Das Selbstreinigungsvermögen aller Teilringe von anhaftendem Boden ist dadurch ebenfalls merklich größer. Beides ist aber von entscheidender Wichtigkeit bei der Benutzung einer Ackerwalze als Kombinationsglied hinter einer Bodenbearbeitungsmaschine, für den Tauglichkeitsgrad der Walze. Eine alternative Achse 11 ist runden Querschnitts und hat aufgesetzte Mitnehmer 12. Analog dazu ist der Nabendurchbruch des Teilringes 1 gestaltet. Ihr Zusammenwirken erfüllt ebenfalls den erfindungsgemäß angestrebten Zweck. Andere, zweckdienliche Gestaltungsformen sind ebenso denkbar, sofern sie den Erfindugsgedanken erfüllen.

Beim Gestaltungs/ Ausführungsbeispiel zufolge des zweiten Ausführungsweges ist jeder Teilring 1 modifiziert gemäß Teilring 1b. Auf der einen Nabenstirnseite ragen in axialer Richtung aus der Nabenumwandung ein oder mehr zungenartige Vorsprünge 3a seitlich ab, während in der Nabenumwandung der anderen Stirnseite entsprechend geformte und bemessene Einbuchtung/en 3b angeordnet sind, in die die zungenartigen Vorsprünge 3a des benachbarten Teilringes 1b formschlüssigeingreifen und dadurch alle Teilringe 1b gleicher Ausformung auf einer gemeinsamen Achse runden Querschnitts miteinander drehfest verbinden. Die solchermaßen miteinander verbundenen Teilringe 1b bilden eine in sich geschlossene Dreheinheit, die zwar auf der gemeinsamen Achse drehbar gelagert ist, aber die betriebsmäßige Funktion und Wirkung ist genau gleich, wie beim ersten Ausführungsweg, da auch die Zuordnung der Distanzbüchse und des zweiten Teilringes 2 die gleiche ist. Die Abtriebseinrichtung 6, 7 ist in diesem Falle jedoch nicht der Achse, sondern einem der am Ende des geschlossenen Ringverbandes befindlichen Teilring 1b zugeordnet.

Das Erfindungsprinzyp ist ohne Einschränkung bei allen Ackerwalzen anwendbar, die aus Walzenringen/Walzenteilringen verschiedenen Umkreisdurchmessers aufgebaut sind, egal welcher sonstigen Formgebung, Gestaltung unf Dimensionierung, wenn nur die Ringe kleineren Umkreisdurchmessers drehfest auf einer gemeinsamen Achse gelagert und die Ringe größeren Umkreisdurchmessers mit radialer Beweglichkeit und mit axialem Spiel zwischen zwei ersten drehbar gelagert sind.

Für ein möglichst schlupffreises und sichers Abrollen der Ackerwalze im lockeren und deshalb zu festigenden Boden , insbesondere aber bei Fremdlastbeaufschlagung der Walze, ist es seht von Vorteil, daß zumindest die Teilringe 1, 1b mit gezacktem, gezahntem oder ähnlich ausgeführtem Umkreis-Laufkranz versehen sind, beispielsweise wie bei DE 27 47 535.C2.

Neu gegenüber DE 27 47 535.C2 ist auch der weitere Erfindungsgedanke, für Sonderfälle, z.B. zur streifenweisen Bodenbearbeitung vor oder nach der Saat, oder zu Pflegemaßnahmen in Reihenkulturen, den gewünschten Reihenabständen angepaßt, nur Teilringe 1, 1b auf einer Achse 4, 11 aufzureihen -zeichnerisch/figürlich nicht dargestellt-

.

Zur Durchführung des weiteren Erfindungsgedankens, die Abroll-Umdrehungen der Ackerwalze für den wegabhängigen Antrieb von Nebenaggregaten abzunehmen, ist auf der gemeinsamen Walzenachse 4, 11 eine Abtriebsvorrichtung, gebildet beispielsweise aus einem Kettenrad 6 und einer zweckentsprechenden Triebkette 7 ,und angeordnet auf oder an der Achse entweder außerhal 8 des Achslagers 10 oder innerhalb 9 desselben. Zum teilweisen oder gänzlichen Schutz gegen Schmutz und Feuchtigkeit ist das Abtriebsaggregat in geeigneter Weise mit einer Schutzvorrichtung versehen.
Es ist auch denkbar, die Walzendrehbewegungen in anderer Weise, z.B. mittels einer biegsamen Welle oder Gelenkwelle vonder Achse 4 oder von einem Teilring 1b abzunehmen und an das Nebenaggregat direkt oder indirekt zu übertragen, was für den Erfindungsgedanken allenfalls nebensächlich ist.
Zur Drehgestlagerung der Teilringe 1 auf und mit der Achse ist es natürlich auch denkbar, die Nabe an geeigneter Stelle, oder die ihr zugeordnete Distanzbüchse , sowie die Achse an den richtigen Abschnitten mit einer oder mehr Querbohrung/en zu versehen und in geeigneter Weise miteinander zu verstiften/verbinden.

## Ansprüche

1. An die Hebeeinrichtung eines Schleppers angebaute, oder lediglich gezogene Ackerwalze zur Bearbeitung und Festigung landwirtschaftlicher Böden, bestehend aus mehreren auf einer gemeinsamen Achse parallel zueinander gelagerten und axial aneinander gehaltenen Walzenringen, vorzugsweise mit gezahnten bzw. gezackten Walzenringen, deren Zacken prismenförmig ausgebildet, mit ihren Spitzen auf einem gemeinsamen Umkreisdurchmesser liegen und mit nach beiden Seiten von einer senkrecht zur gemeinsamen Achse stehenden Ebene aus nach außen abfallenden Flanken versehen sind, wobei jeder Walzenring aus zwei in der senkrecht zur Achse stehenden Ebene getrennten Teilringen gleicher wirksamer Zackenhöhe aufgebaut ist, von denen jeweils ein Teilring mit einer Nabe etwas größeren lichten Durchmessers als der der gemeinsamen Achse. auf letzterer gelagert und mit einer seitlich abstehenden Distanzbüchse auf Abstand zu dem benachbarten, gleich ausgebildeten Teilring gehalten ist und die anderen Teilringe mit größerem Umkreisdurchmesser und einer Nabenhülse entsprechend größeren Innendurchmessers radial beweglich auf der dem ersten Teilring zugeordneten Distanzbüchse mit axialem Spiel zwischen zwei benachbarten ersten Teilringen geführt sind, **dadurch gekennzeichnet,** daß jeder Teilring (1) auf einer gemeinsamen Achse (4) drehfest gelagert ist.

2. Ackerwalze nach Patentanspruch 1, dadurch gekennzeichnet, daß jeder Teilring (1) mit seinem benachbarten, gleich ausgebildeten Teilring, an den Nabenstirnseiten, drehfest verbunden ist, beispielsweise mittels seitlich , in axiale Richtung abragende Vorsprünge (3a) und Einbuchtungen (3b) auf /an der gegenüberliegenden Nabenstirnseite.

3. Ackerwalze nach Patentanspruch 1-2, dadurch gekennzeichnet, daß der in axiale Richtung verlaufende Durchbruch der Nabe (3) ein mehreckiges Querschnittprofil aufweist.

4. Ackerwalze nach Patentanspruch 1-3, dadurch gekennzeichnet, daß die gemeinsame Walzenachse (4) ein mehreckiges Querschnitt profil aufweist.

5. Ackerwalze nach Patentanspruch 1-4, dadurch gekennzeichnet, daß die gemeinsame Walzenachse (11) Mitnehmerausbuchtung/en (12) aufweist.

6. Ackerwalze nach Patentanspruch 1-5, dadurch gekennzeichnet, daß nur Teilringe (1) auf der gemeinsamen Walzenachse (4, 11) angeordnet und drehfest gelagert sind.

7. Ackerwalze nach Patentanspruch 1-6, dadurch gekennzeichnet, daß an/auf der gemeinsamen Walzenachse (4, 11), oder sonstwie mit Teilringen drehfest verbunden Walzenachse, eine Achsdrehabnahmeeinrichtung (6, 7) angreift/angeordnet ist.

8. Ackerwalze nach Patentanspruch 1-7, dadurch gekennzeichnet, daß die Achsdrehabnahmeeinrichtung eine biegsame oder kardanische Welle ist.

9. Ackerwalze nach Patentanspruch 1-8, dadurch gekennzeichnet, daß in den freien Raum/axialen Abstand zwischen je zwei benachbarten Teilringen (1, 1b) ein zweckentsprechend ausgebildeter Abstreifarm radial oder tangential zur Achse (4, 11)/zu der der Nabe der Teilringe (1, 1b) zugeordneten Distanzbüchse ausgerichtet, sowie in zweckentsprechender Höhenlage angeordnet ist une eingreift.

10. Ackerwalze nach Patentanspruch 1-9, dadurch gekennzeichnet, daß die Teilringe (1, 1b, 2) in beliebig anderer, jedoch den Sinn und Zweck des Erfindungsgedankens erfüllender Form, Ausgestaltung und Dimensionierung ausgeführt sind.

Fig. 1

Fig. 2

Fig. 3

0 292 589

0 292 589

7

4

9

10

6

Fig. 4

1b

3a

3b

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | FR-A-2 406 380 (GUTTLER) <br> * Insgesamt * & DE-A-2 747 535 <br> --- | 1,3,4,6 ,7,10 | A 01 B 29/04 |
| Y <br><br> A | DE-A-1 757 136 (ROSENKRANZ) <br> * Ansprüche 1,2,8; Figuren 5,6 * <br><br> --- | 1,3,4,6 ,7,10 <br> 8 | |
| A | DE-C- 239 921 (KLEINHANS) <br> * Insgesamt * <br> --- | 2 | |
| A | US-A-3 173 493 (RENAULT) <br> * Spalte 3, Zeilen 47-56; Figur 10 * <br> --- | 2 | |
| A | DE-C- 163 684 (KUSTER) <br> * Insgesamt * <br> --- | 1 | |
| A | US-A-1 916 330 (NORDSTRÖM) <br> * Seite 1, Zeilen 15,16 * <br> --- | 9 | |
| A | DE-B-1 178 630 (ROSENKRANZ) <br> ----- | | |

**RECHERCHIERTE SACHGEBIETE (Int. Cl.4)**

A 01 B

Der vorliegende Recherchenbericht wurde für alle Patentansprüche erstellt

| Recherchenort | Abschlußdatum der Recherche | Prüfer |
|---|---|---|
| DEN HAAG | 26-01-1988 | VON ARX V.U. |

EPO FORM 1503 03.82 (P0403)